(19) Europäisches Patentamt
European Patent Office
Office européen des brevets

(11) EP 4 223 556 B1

(12) EUROPEAN PATENT SPECIFICATION

(45) Date of publication and mention of the grant of the patent:
**16.10.2024 Bulletin 2024/42**

(21) Application number: **23153589.9**

(22) Date of filing: **27.01.2023**

(51) International Patent Classification (IPC):
***B60C 1/00*** *(2006.01)* ***B60C 11/00*** *(2006.01)*
***C08K 3/36*** *(2006.01)*

(52) Cooperative Patent Classification (CPC):
(C-Sets available)
**B60C 1/0016;** B60C 11/00; B60C 2011/0025;
B60C 2011/0355; Y02T 10/86 (Cont.)

# (54) PNEUMATIC TIRE

LUFTREIFEN

PNEUMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **03.02.2022 JP 2022015767**

(43) Date of publication of application:
**09.08.2023 Bulletin 2023/32**

(73) Proprietor: **Sumitomo Rubber Industries, Ltd.**
**Kobe-shi, Hyogo 651-0072 (JP)**

(72) Inventor: **MATSUI, Tomoya**
**Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 1 630 003**
**EP-A1- 3 254 872**
**WO-A1-2018/216879**
**WO-A1-2019/239570**
**JP-A- 2019 089 911**
**JP-B1- 6 800 435**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 7/00, C08L 9/06, C08L 9/00, C08L 91/00, C08L 9/00, C08L 19/003, C08L 91/06, C08L 45/00, C08K 3/06, C08K 5/31, C08K 5/47, C08K 5/09, C08K 5/18, C08K 3/04, C08K 3/36, C08K 5/548;**
**C08L 7/00, C08L 9/06, C08L 9/00, C08L 91/00, C08L 19/003, C08L 91/06, C08L 45/00, C08K 3/06, C08K 5/31, C08K 5/47, C08K 5/09, C08K 5/18, C08K 3/04;**
**C08L 7/00, C08L 9/06, C08L 9/00, C08L 91/00, C08L 19/003, C08L 91/06, C08L 45/00, C08K 3/06, C08K 5/31, C08K 5/47, C08K 5/09, C08K 5/18, C08K 3/04, C08K 3/36, C08K 5/548, C08K 5/103;**
**C08L 7/00, C08L 9/06, C08L 9/00, C08L 91/00, C08L 25/16, C08L 19/003, C08L 91/06, C08L 45/00, C08K 3/06, C08K 5/31, C08K 5/47, C08K 5/09, C08K 5/18, C08K 3/04, C08K 3/36, C08K 5/548**

## Description

### BACKGROUND OF THE INVENTION

#### Field of the Invention

The present invention relates to a pneumatic tire, and more specifically relates to a pneumatic tire having excellent steering stability on a wet road surface during high speed running.

#### Background Art

Pneumatic tires (hereinafter, also referred to simply as "tires") are required to have high braking performance (grip performance) from the viewpoint of safety, and various technologies have been proposed regarding improvement of grip performance and steering stability (for example, Japanese Laid-Open Patent Publication Nos. 2016-043709, 2018-135436, 2021-167401, etc.).

However, with the development of expressways in recent years, it is not uncommon to travel long distances on expressways, and there has been an increasing demand for improving steering stability and grip performance on a wet road surface (wet grip performance).

The present invention has been made in view of the above circumstances, and an object of the present invention is to provide a pneumatic tire that has sufficiently improved steering stability on a wet road surface during high speed running.

### SUMMARY OF THE INVENTION

The present inventor has conducted an intensive study to solve the above problem and has found that the problem can be solved by the invention described below.

The present invention is directed to a pneumatic tire including a circumferential main groove on a tread portion, wherein

an outermost layer of the tread portion is formed by using a rubber composition containing vulcanized rubber powder,
an area ratio S (%) of the vulcanized rubber powder in a cross-section of the outermost layer is not less than 5% and not greater than 50%,
a loss tangent (30°C tanδ) of the rubber composition measured under conditions of 30°C, a frequency of 10 Hz, an initial strain of 5%, and a dynamic strain rate of 1% with deformation mode: tension is not greater than 0.15,
a groove depth D (mm) of the circumferential main groove is greater than 6 mm, and
S/D > 0.85 is satisfied.

According to the present invention, it is possible to provide a pneumatic tire that has sufficiently improved steering stability on a wet road surface during high speed running.

### DETAILED DESCRIPTION

#### [1] Characteristics of Pneumatic Tire According to Present invention

First, the characteristics of the tire according to the present invention will be described.

#### 1. Outline

The pneumatic tire according to the present invention is a pneumatic tire including a circumferential main groove on a tread portion, wherein an outermost layer (hereinafter, also referred to as "cap rubber layer") of the tread portion is formed by using a rubber composition (hereinafter, also referred to as "tread rubber composition") containing vulcanized rubber powder. An area ratio (occupation area ratio) S (%) of the vulcanized rubber powder in a cross-section of the cap rubber layer is not less than 5% and not greater than 50%, and a loss tangent (30°C tanδ) of the rubber composition measured under conditions of 30°C, a frequency of 10 Hz, an initial strain of 5%, and a dynamic strain rate of 1% with deformation mode: tension is not greater than 0.15. In addition, a groove depth D (mm) of the circumferential main groove is greater than 6 mm, and further, S/D > 0.85 is satisfied.

By having these characteristics, as described later, it is possible to provide a pneumatic tire that has sufficiently improved steering stability on a wet road surface during high speed running.

2. Mechanism for Exhibiting Advantageous Effects in Pneumatic Tire According to Present invention

The mechanism for, by a ground-contact surface coming into sufficient contact with even a wet road surface, exhibiting the effect of sufficiently improving steering stability on the wet road surface during high speed running in the pneumatic tire according to the present invention, is inferred as follows.

(1) Containing Vulcanized Rubber Powder in Tread Rubber Composition

As described above, in the present invention, the cap rubber layer is formed by using the rubber composition containing the vulcanized rubber powder, and the area ratio S (%) of the vulcanized rubber powder in the cross-section of the cap rubber layer is not less than 5% and not greater than 50%.

By containing the vulcanized rubber powder in a certain amount or more, specifically, such that the area ratio S (%) of the vulcanized rubber powder in the cross-section of the cap rubber layer is not less than 5%, projections and recesses are formed on the surface of the tread portion, making it easier for the tire ground-contact surface to be caught on a road surface. Therefore, an anchor effect (biting effect) on a road surface can be obtained, so that steering stability on a wet road surface during high speed running can be improved. The area ratio S (%) is more preferably not less than 6%, further preferably not less than 9%, and particularly preferably not less than 20%.

However, when an excessively large amount of the vulcanized rubber powder is contained in the cap rubber layer, and the area ratio S of the vulcanized rubber powder is excessively large, specifically, exceeds 50%, reinforcing properties may decrease, causing a decrease in the durability of the tire. Therefore, the area ratio S of the vulcanized rubber powder is preferably not greater than 50%, more preferably not greater than 48%, further preferably not greater than 45%, and particularly preferably not greater than 40%.

The above-described "area ratio S of the vulcanized rubber powder" can be obtained, for example, by imaging a sample prepared by cutting the tread portion such that a surface parallel to a tread surface becomes an observation cross-section with a scanning electron microscope, obtaining the area of a domain occupied by the vulcanized rubber powder, and obtaining the ratio of this area to the area of the entire cross-section.

(2) Loss Tangent of Tread Rubber Composition

In the present invention, the loss tangent (30°C tanδ) of the tread rubber composition measured under conditions of 30°C, a frequency of 10 Hz, an initial strain of 5%, and a dynamic strain rate of 1% with deformation mode: tension is not greater than 0.15.

By decreasing the 30°C tanδ to be not greater than 0.15, the phase difference between input and response with respect to the rubber layer is decreased. Therefore, transmission of force from the ground-contact surface to the interior of the tread portion becomes faster, so that good responsiveness can be ensured even during high speed running. The 30°C tanδ is more preferably not greater than 0.12 and further preferably not greater than 0.10. On the other hand, the lower limit thereof is not particularly limited, but the 30°C tanδ is preferably not less than 0.03, more preferably not less than 0.05, and further preferably not less than 0.07.

The above-described "loss tangent (30°C tanδ)" can be measured, for example, by using a viscoelasticity measurement device such as "EPLEXOR (registered trademark)" manufactured by NETZSCH-Gerätebau GmbH.

(3) Groove Depth of Circumferential Main Groove

In the present invention, the groove depth D (mm) of the circumferential main groove is greater than 6 mm. By setting the groove depth D of the circumferential main groove to be greater than 6 mm, a sufficient drainage function between the ground-contact surface and a road surface is ensured, the tread surface is easily brought into contact with the road surface, and good responsiveness can be ensured during high speed running.

In the present disclosure, the "circumferential main groove" refers to a groove that has a groove width greater than 3 mm, extends in the tire circumferential direction, and is closest to a tire equator plane. The "groove depth D" refers to a height from a groove bottom to an opening in the tire radial direction under no load in a standardized state, and the standardized state refers to a state where the tire is fitted on a standardized rim and a standardized internal pressure is applied thereto.

Here, the "standardized rim" is a rim that is defined, in a standard system including a standard on which the tire is based, by the standard for each tire, and refers to, for example, the standard rim at an applicable size described in "JATMA YEAR BOOK" in the JATMA (The Japan Automobile Tyre Manufacturers Association, Inc.) standard, the "Measuring Rim" described in "STANDARDS MANUAL" in the ETRTO (The European Tyre and Rim Technical Organisation) standard, or the "Design Rim" described in "YEAR BOOK" in the TRA (The Tire and Rim Association, Inc.) standard. In the case of a tire that is not specified in any standard, the "standardized rim" refers to the rim having the

smallest rim diameter, and, next to this, refers to the rim having the smallest rim width, among rims to which the tire can be fitted and which allow the internal pressure of the tire to be maintained, that is, rims that do not cause air leakage from between the rim and the tire.

The "standardized internal pressure" is an air pressure that is defined by the standard for each tire, and refers to the maximum air pressure in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

(4) Cooperation of (1) to (3)

In the present disclosure, it is considered that, as a result of cooperation of (1) to (3) described above, the ground-contact surface comes into sufficient contact with even a wet road surface, ensuing sufficient grip performance and enabling quick response. Therefore, it is considered that steering stability during high speed running on a wet road surface is improved.

(5) Relationship between Area Ratio S (%) of Vulcanized Rubber Powder and Groove Depth D (mm)

However, if the groove depth is excessively large, the drainage function is improved, but the stiffness of the tread portion is decreased, so that a reaction force generated in the tread portion is reduced. Therefore, a grip force may also be reduced, causing a decrease in steering stability.

Therefore, in the present invention, by setting the area ratio S (%) of the vulcanized rubber powder to a certain value or more with respect to the groove depth D (mm), specifically, satisfying $S/D > 0.85$, an anchor effect by the vulcanized rubber powder which is sufficiently large with respect to the groove depth of the tread portion can be obtained, thereby preventing a decrease in steering stability from being caused. The area ratio S (%) is more preferably not less than 1.0 and further preferably not less than 3.5. On the other hand, the upper limit thereof is not particularly limited, but the area ratio S (%) is preferably not greater than 8.0, more preferably not greater than 7.0, and further preferably not greater than 6.0.

[2] More Preferable Mode of Tire According to Present Disclosure

The tire according to the present disclosure can achieve a greater effect by taking the following mode.

1. Rubber Component in Tread Rubber Composition

In the present disclosure, preferably, the tread rubber composition contains, as a rubber component, a natural rubber (NR), a butadiene rubber (BR), and a styrene-butadiene rubber (SBR) having a styrene ratio of not greater than 30% by mass, and a total amount RR of these rubbers in 100 parts by mass of the rubber component is not less than 90 parts by mass. The total amount RR is more preferably not less than 95 parts by mass.

Accordingly, the glass transition temperature Tg of the rubber component can be made lower, so that the 30°C $\tan\delta$ can be made smaller while the flexibility of the rubber surface at low temperatures corresponding to the time of high speed running is ensured, and transmission of force from the ground-contact surface to the tread portion can be made even faster. Therefore, it is considered that steering stability on a wet road surface during high speed running is further improved.

2. Containing Silica in Tread Rubber Composition

In the present disclosure, the tread rubber composition preferably contains silica as a filler in an amount of not greater than 65 parts by mass per 100 parts by mass of the rubber component. The amount of the silica is more preferably not greater than 60 parts by mass. On the other hand, the lower limit thereof is not particularly limited, but the amount of the silica is preferably not less than 35 parts by mass and more preferably not less than 40 parts by mass.

By mixing the silica, the 30°C $\tan\delta$ can be made smaller, and transmission of force from the ground-contact surface to the tread portion can be made even faster. Therefore, it is considered that steering stability on a wet road surface during high speed running is further improved.

In this case, a silane coupling agent is preferably used in combination with the silica, and accordingly, the dispersibility of the silica in the tread rubber composition can be improved, so that the 30°C $\tan\delta$ can be made even smaller, and transmission of force from the ground-contact surface to the tread portion can be made even faster. Therefore, it is considered that steering stability on a wet road surface during high speed running is further improved.

As a specific silane coupling agent, a silane coupling agent having a thiocarbonyl group is preferable.

3. Modifying Group in SBR

In the present disclosure, the above-described SBR preferably has a modifying group that can react with the silica. Accordingly, the dispersibility of the silica and the bonding between polymers can be enhanced, so that the 30°C tanδ can be made even smaller, and transmission of force from the ground-contact surface to the tread portion can be made even faster. Therefore, it is considered that wet grip performance is further improved and steering stability is improved.

4. Relationship between Occupation Area Ratio and Gauge of Tread Portion

In the present disclosure, when a thickness (gauge) on the equator plane of the tread portion is denoted by G (mm), the thickness (gauge) G and the above-described area ratio S (%) of the vulcanized rubber powder preferably satisfy $S/G \geq 0.6$. S/G is more preferably not less than 0.9 and further preferably not less than 2.0. On the other hand, the upper limit thereof is not particularly limited, but S/G is preferably not greater than 7.0, more preferably not greater than 6.0, and further preferably not greater than 5.0.

As the thickness of the tread portion is increased, the rubber more easily enters into a road surface, but on the other hand, the stiffness of the tread portion is decreased, so that it is more difficult to obtain a reaction force. Therefore, in the present disclosure, preferably, the area of the vulcanized rubber powder is increased as the gauge is increased, specifically, $S/G \geq 0.6$ is satisfied, whereby grip performance on a tread surface is enhanced and a large reaction force is easily obtained.

As described above, the "gauge G of the tread portion" refers to the thickness of the tread portion on the tire equator plane, but in the case where there is a circumferential groove on the equator plane, the "gauge G of the tread portion" refers to the thickness of the tread portion at a portion closest to the equator plane other than the circumferential groove. In addition, the "gauge G of the tread portion" is the linear distance from the outermost surface of the tread portion to the innermost layer interface of the tread portion, and in the case of a tire including a belt layer, a belt reinforcing layer, and a carcass layer, the "gauge G of the tread portion" is the distance to the layer on the outermost side of the tire among these layers.

5. Relationship between 30°C tanδ and gauge G of tread portion

As described above, by decreasing the 30°C tanδ, transmission of force from the ground-contact surface to the tread portion becomes faster. On the other hand, as the thickness of the tread portion is increased, it is more difficult to obtain a reaction force. Therefore, in the present disclosure, the 30°C tanδ and the gauge G of the tread portion preferably satisfy (30°C tanδ $\times$ G) $\leq$ 1.30. (30°C tanδ $\times$ G) is more preferably not greater than 1.10 and further preferably not greater than 1.00. Accordingly, better steering stability on a wet road surface during high speed running is achieved. On the other hand, the lower limit of (30°C tanδ $\times$ G) is not particularly limited, but (30°C tanδ $\times$ G) is preferably not less than 0.30, more preferably not less than 0.40, and further preferably not less than 0.50.

6. Particle Size of Vulcanized Rubber Powder

In the present disclosure, the vulcanized rubber powder preferably has a particle size finer than 30 mesh pass and coarser than 250 mesh pass obtained through a test sieve specified in JIS Z8801-1. When the particle size is set to be coarser than 250 mesh pass, an anchor effect can be sufficiently exhibited, better wet grip performance is achieved, and steering stability can be improved. On the other hand, when the particle size is set to be finer than 30 mesh pass, it becomes easier to achieve uniform dispersion in the rubber composition for forming the cap rubber layer, and it is possible to easily achieve sufficient durability.

[3] Embodiment

Hereinafter, the present disclosure will be specifically described based on an embodiment.

1. Tread Rubber Composition

(1) Blending Materials

In the present disclosure, the tread rubber composition for forming the cap rubber layer can be obtained from a rubber component and other blending materials described below, excluding the vulcanized rubber powder.

(a) Rubber Component

The rubber component is not particularly limited, and rubbers (polymers) generally used in the production of tires, such as isoprene-based rubbers, diene-based rubbers such as BR, SBR, and nitrile rubber (NBR), and butyl-based rubbers such as isobutylene-isoprene-rubber, can be used. Among them, diene-based rubbers are preferably used. These rubbers may be used individually. However, any of an isoprene-based rubber, a BR, and an SBR is preferably contained, two or more of these rubbers are more preferably contained, and these three rubbers, that is, the isoprene-based rubber, the BR, and the SBR, are further preferably contained.

(I) Isoprene-Based Rubber

Examples of the isoprene-based rubber include natural rubber (NR), isoprene rubber (IR), reformed NR, modified NR, and modified IR, and NR is preferable since NR has excellent strength.

As the NR, for example, NRs that are generally used in the tire industry, such as SVR-L, SIR20, RSS#3, and TSR20, can be used. The IR is not particularly limited, and, as the IR, for example, IRs that are generally used in the tire industry, such as IR2200, can be used. Examples of the reformed NR include deproteinized natural rubber (DPNR) and ultra-pure natural rubber (UPNR), examples of the modified NR include epoxidized natural rubber (ENR), hydrogenated natural rubber (HNR), and grafted natural rubber, and examples of the modified IR include epoxidized isoprene rubber, hydrogenated isoprene rubber, and grafted isoprene rubber. These rubbers may be used individually, or two or more of these rubbers may be used in combination.

From the viewpoint of improving responsiveness of the rubber composition, the amount of the isoprene-based rubber in 100 parts by mass of the rubber component is preferably not less than 30 parts by mass and more preferably not less than 35 parts by mass. On the other hand, as for the upper limit of the amount of the isoprene-based rubber, the amount of the isoprene-based rubber is preferably not greater than 50 parts by mass and more preferably not greater than 45 parts by mass.

(II) SBR

The amount of the SBR in 100 parts by mass of the rubber component is preferably not less than 20 parts by mass and more preferably not less than 25 parts by mass. The upper limit of the amount of the SBR is not particularly limited, but the amount of the SBR is preferably not greater than 40 parts by mass and more preferably not greater than 35 parts by mass.

The weight-average molecular weight of the SBR is, for example, greater than 100 thousand and less than 2 million. The styrene content of the SBR is not particularly limited, but is preferably not greater than 30% by mass as described above. The styrene content of the SBR is more preferably not greater than 25% by mass and further preferably not greater than 20% by mass. On the other hand, as for the lower limit of the styrene content of the SBR, the styrene content of the SBR is preferably not less than 3% by mass, more preferably not less than 5% by mass, and further preferably not less than 8% by mass. The vinyl bond content (1,2-bond butadiene unit content) of the SBR with respect to the butadiene moiety of the SBR is, for example, preferably greater than 5% by mole, more preferably greater than 10% by mole, and further preferably greater than 15% by mole. On the other hand, as for the upper limit of the vinyl bond content, the vinyl bond content is preferably less than 70% by mole, more preferably less than 40% by mole, and further preferably less than 30% by mole. SBR structure identification (measurement of styrene content and vinyl bond content) can be performed by using, for example, a JNM-ECA series device manufactured by JEOL Ltd.

The SBR is not particularly limited, and, for example, an emulsion-polymerized styrene-butadiene rubber (E-SBR), a solution-polymerized styrene-butadiene rubber (S-SBR), etc., can be used. The SBR may either be an unmodified SBR or a modified SBR. In addition, a hydrogenated SBR obtained by hydrogenating the butadiene moiety in an SBR may be used, and the hydrogenated SBR may be obtained by subsequent hydrogenation of the BR moiety in an SBR, or the same structure may be obtained by copolymerizing styrene, ethylene, and butadiene.

As described above, the modified SBR is preferably an SBR having a functional group that interacts with a filler such as silica, and examples of such a modified SBR include a terminal-modified SBR obtained by modifying at least one terminal of an SBR with a compound (modifier) having the functional group (a terminal-modified SBR having the functional group at a terminal thereof), a main chain-modified SBR having the functional group in the main chain thereof, a main chain/terminal-modified SBR having the functional group in the main chain and at a terminal thereof (for example, a main chain/terminal-modified SBR that has the functional group in the main chain thereof and in which at least one terminal thereof is modified with the modifier), and a terminal-modified SBR that is modified (coupled) by using a multifunctional compound having two or more epoxy groups in the molecule thereof and to which a hydroxyl group or an epoxy group is introduced.

Examples of the above functional group include an amino group, an amide group, a silyl group, an alkoxysilyl

group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may have a substituent.

Moreover, as the modified SBR, for example, an SBR modified with a compound (modifier) represented by the following formula can be used.

[Chem. 1]

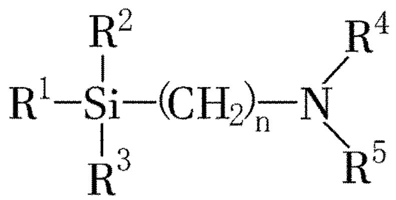

In the formula, $R^1$, $R^2$, and $R^3$ are the same or different from each other, and each represent an alkyl group, an alkoxy group, a silyloxy group, an acetal group, a carboxyl group (-COOH), a mercapto group (-SH), or a derivative thereof. $R^4$ and $R^5$ are the same or different from each other, and each represent a hydrogen atom or an alkyl group. $R^4$ and $R^5$ may be linked together to form a ring structure together with a nitrogen atom. "n" represents an integer.

As the modified SBR modified with the compound (modifier) represented by the above formula, an SBR obtained by modifying polymerization terminals (active terminals) of a solution-polymerized styrene-butadiene rubber (S-SBR) with the compound represented by the above formula (a modified SBR described in Japanese Laid-Open Patent Publication No. 2010-111753, etc.), can be used.

As $R^1$, $R^2$, and $R^3$, an alkoxy group is suitable (an alkoxy group preferably having 1 to 8 carbon atoms, more preferably 1 to 4 carbon atoms). As $R^4$ and $R^5$, an alkyl group (preferably, an alkyl group having 1 to 3 carbon atoms) is suitable. The integer "n" is preferably not less than 1 and not greater than 5, more preferably not less than 2 and not greater than 4, and further preferably 3. In addition, when $R^4$ and $R^5$ are linked together to form a ring structure together with the nitrogen atom, a four to eight-membered ring is preferably formed. Examples of the alkoxy group include cycloalkoxy groups (a cyclohexyloxy group, etc.) and aryloxy groups (a phenoxy group, a benzyloxy group, etc.).

Specific examples of the modifier include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These compounds may be used individually, or two or more of these compounds may be used in combination.

As the modified SBR, a modified SBR modified with the following compound (modifier) can also be used. Examples of the modifier include: polyglycidyl ethers of polyhydric alcohols, such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups, such as diglycidylated bisphenol A; polyepoxy compounds such as 1,4-diglycidylbenzene, 1,3,5-triglycidylbenzene, and polyepoxylated liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl metaxylenediamine, tetraglycidylaminodiphenylmethane, tetraglycidyl-p-phenylenediamine, diglycidylaminomethylcyclohexane, and tetraglycidyl-1,3-bisaminomethylcyclohexane; amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane and (3-glycidyloxypropyl)-pentamethyldisiloxane; sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl] sulfide, (trimethylsilyl)[3-(methyldiethoxysilyl)propyl]sulfide, (trimethylsilyl)[3-(methyldipropoxysilyl)propyl] sulfide, and (trimethylsilyl)[3-(methyldibutoxysilyl)propyl]sulfide; N-substituted aziridine compounds such as ethyleneimine and propyleneimine; alkoxysilanes such as methyltriethoxysilane, N,N-bis(trimethylsilyl)-3-aminopropyltrimethoxysilane, N,N-bis(trimethylsilyl)-3-aminopropyltriethoxysilane, N,N-bis(trimethylsilyl)aminoethyltrimethoxysilane, and N,N-bis(trimethylsilyl)aminoethyltriethoxysilane; (thio)benzophenone compounds having an amino group and/or a substituted amino group, such as 4-N,N-dimethylaminobenzophenone, 4-N,N-dit-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurolactam, N-vinyl-ω-laurolactam, N-methyl-β-propiolactam, and N-phenyl-β-propiolactam; and moreover, N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. Modification with the above compounds (modifiers) can be carried out by a known method.

As the SBR, for example, SBRs manufactured by and available from SUMITOMO CHEMICAL COMPANY, LIMITED, JSR Corporation, Asahi Kasei Corporation, Zeon Corporation, etc., can be used. These SBRs may be used individually, or two or more of these SBRs may be used in combination.

(III) BR

The amount of the BR in 100 parts by mass of the rubber component is preferably not less than 20 parts by mass and more preferably not less than 25 parts by mass. The upper limit of the amount of the BR is not particularly limited, but the amount of the BR is preferably not greater than 40 parts by mass and more preferably not greater than 35 parts by mass.

The weight-average molecular weight of the BR is, for example, greater than 100 thousand and less than 2 million. The vinyl bond content (1,2-bond butadiene unit content) of the BR is, for example, greater than 1% by mass and less than 30% by mass. The cis content of the BR is, for example, greater than 1% by mass and less than 98% by mass. The trans content of the BR is, for example, greater than 1% by mass and less than 60% by mass.

The BR is not particularly limited, and a BR having a high cis content (a cis content of 90% or higher), a BR having a low cis content, a BR containing syndiotactic polybutadiene crystals (SPB-containing BR), etc., can be used. The BR may be either an unmodified BR or a modified BR, and, as the modified BR, for example, a tin-modified BR can also be used. As the tin-modified BR, a BR obtained by polymerizing 1,3-butadiene with a lithium initiator and then adding a tin compound to the polymerized 1,3-butadiene and in which the terminals of the tin-modified BR molecules are bound to each other through tin-carbon bonds, is preferable.

Examples of the lithium initiator include lithium-based compounds such as alkyl lithiums, aryl lithiums, vinyl lithium, organotin lithium, and organic nitrogen lithium compounds, and lithium metal. A tin-modified BR with a high vinyl content and a low cis content can be manufactured using the lithium initiator as an initiator for the tin-modified BR.

Examples of the tin compound include tin tetrachloride, butyltin trichloride, dibutyltin dichloride, dioctyltin dichloride, tributyltin chloride, triphenyltin chloride, diphenyldibutyltin, triphenyltin ethoxide, diphenyldimethyltin, ditolyltin chloride, diphenyltin dioctanoate, divinyldiethyltin, tetrabenzyltin, dibutyltin distearate, tetraaryltin, and p-tributyltin styrene.

The content of tin atoms in the tin-modified BR is preferably not less than 50 ppm and more preferably not less than 60 ppm. On the other hand, the content of tin atoms is preferably not greater than 3000 ppm, more preferably not greater than 2500 ppm, and further preferably not greater than 250 ppm.

The molecular weight distribution (Mw/Mn) of the tin-modified BR is preferably not greater than 2 and more preferably not greater than 1.5.

The vinyl bond content of the tin-modified BR is preferably not less than 5% by mass and more preferably not less than 7% by mass. On the other hand, the vinyl bond content of the tin-modified BR is preferably not greater than 50% by mass and more preferably not greater than 20% by mass.

The above S-modified BRs or tin-modified BRs may be used individually, or two or more of the above S-modified BRs or tin-modified BRs may be used in combination.

As the BR, for example, products of UBE Corporation, JSR Corporation, Asahi Kasei Corporation, Zeon Corporation, etc., can be used.

(IV) Other Rubber Component

Moreover, as another rubber component, a rubber (polymer) generally used in the production of tires, such as nitrile rubber (NBR), may be contained as necessary.

(b) Blending Materials Other Than Rubber Component

(I) Filler

In the present embodiment, the rubber composition preferably contains a filler. Specific examples of the filler include silica, carbon black, graphite, calcium carbonate, talc, alumina, clay, aluminum hydroxide, and mica. Among them, silica is preferably contained in combination with a silane coupling agent, and carbon black may be further contained as necessary.

The total blending amount of the filler per 100 parts by mass of the rubber component is preferably not less than 40 parts by mass, more preferably not less than 45 parts by mass, and further preferably not less than 50 parts by mass. On the other hand, from the viewpoint of dispersibility in the rubber composition, the total blending amount of the filler is preferably not greater than 150 parts by mass, more preferably not greater than 110 parts by mass, and further preferably not greater than 70 parts by mass.

(i) Silica

As for the silica, since the processability is deteriorated if the average primary particle diameter of the silica is excessively small, silica having an average primary particle diameter of greater than 8 nm is preferably used. The average primary particle diameter is more preferably not less than 9 nm and further preferably not less than 10 nm. On the other hand, from the viewpoint of ensuring reinforcing properties of rubber and ensuring steering stability on a wet road surface during high speed running, the average primary particle diameter is preferably not greater than 25 nm, more preferably not greater than 20 nm, and further preferably not greater than 17 nm.

The average primary particle diameter of the silica means the average of values obtained by observing the smallest particle unit of the silica forming an aggregation structure, as a circle, and measuring the absolute maximum length of the smallest particle as the diameter of a circle, and can be obtained as the average of measurements of 400 or more primary particles of the silica observed in the field of view when the silica is observed with a transmission or scanning electron microscope.

Moreover, the BET specific surface area of the silica is preferably greater than 100 $m^2/g$ and more preferably greater than 130 $m^2/g$. On the other hand, the BET specific surface area of the silica is preferably less than 250 $m^2/g$ and more preferably less than 200 $m^2/g$. The above BET specific surface area is a value of $N_2SA$ measured by the BET method according to ASTM D3037-93.

Examples of the silica include dry-process silica (anhydrous silica) and wet-process silica (hydrous silica). Between them, wet-process silica is preferable for the reason that it has a higher silanol group content. In addition, silica using hydrous glass or the like as a raw material, silica using a biomass material such as rice husks as a raw material, etc., may be used.

As the silica, for example, products of Evonik Industries Ag, Rhodia, Tosoh Silica Corporation, Solvay Japan, Ltd., Tokuyama Corporation, etc., can be used.

In the present disclosure, the amount of the silica per 100 parts by mass of the rubber component is preferably not less than 35 parts by mass, more preferably not less than 40 parts by mass, and further preferably not less than 45 parts by mass. On the other hand, from the viewpoint of dispersibility in the rubber composition, the amount of the silica is preferably not greater than 65 parts by mass and more preferably not greater than 60 parts by mass.

(ii) Silane Coupling Agent

When using silica, a silane coupling agent is preferably used together. The silane coupling agent is not particularly limited, and examples of the silane coupling agent include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z manufactured by Momentive Performance Materials, Inc.; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. As described above, among them, a silane coupling agent having a thiocarbonyl

group such as NXT is preferable. These silane coupling agents may be used individually, or two or more of these silane coupling agents may be used in combination.

As the silane coupling agent, for example, products of Evonik Industries Ag, Momentive Performance Materials, Inc., Shin-Etsu Chemical Co., Ltd., Tokyo Chemical Industry Co., Ltd., AZmax.co, DuPont Toray Specialty Materials K.K., etc., can be used.

The amount of the silane coupling agent per 100 parts by mass of the silica is, for example, preferably greater than 3 parts by mass and less than 15 parts by mass, and more preferably not less than 5 parts by mass and not greater than 10 parts by mass.

(iii) Carbon Black

The rubber composition preferably contains carbon black. In the case where silica is not used in combination, the amount of the carbon black per 100 parts by mass of the rubber component is preferably not less than 50 parts by mass and more preferably not less than 55 parts by mass. On the other hand, the amount of the carbon black is preferably not greater than 70 parts by mass and more preferably not greater than 65 parts by mass.

In the case where silica is used in combination, the amount of the carbon black per 100 parts by mass of the rubber component is preferably not less than 1 part by mass and more preferably not less than 3 parts by mass. On the other hand, the amount of the carbon black is preferably not greater than 9 parts by mass and more preferably not greater than 7 parts by mass.

The carbon black is not particularly limited, and examples of the carbon black include: furnace black (furnace carbon black) such as SAF, ISAF, HAF, MAF, FEF, SRF, GPF, APF, FF, CF, SCF, and ECF; acetylene black (acetylene carbon black); thermal black (thermal carbon black) such as FT and MT; and channel black (channel carbon black) such as EPC, MPC, and CC. One of these carbon blacks may be used alone, or two or more of these carbon blacks may be used in combination.

The nitrogen adsorption specific surface area ($N_2SA$) of the carbon black is, for example, greater than 30 $m^2/g$ and less than 250 $m^2/g$. The dibutyl phthalate (DBP) absorption amount of the carbon black is, for example, greater than 50 ml/100 g and less than 250 ml/100 g. The nitrogen adsorption specific surface area of the carbon black is measured according to ASTM D4820-93, and the DBP absorption amount of the carbon black is measured according to ASTM D2414-93.

The carbon black is not particularly limited, and specific examples of the carbon black include N134, N110, N220, N234, N219, N339, N330, N326, N351, N550, and N762.

As commercially available products, products of Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbian Carbon Co., etc., can be used. These carbon blacks may be used individually, or two or more of these carbon blacks may be used in combination.

(iv) Other Filler

In addition to the above-described silica and carbon black, the rubber composition may contain fillers generally used in the tire industry, such as graphite, calcium carbonate, talc, alumina, clay, aluminum hydroxide, mica, and magnesium sulfate. The amount of each of these fillers per 100 parts by mass of the rubber component is, for example, greater than 0.1 parts by mass and less than 150 parts by mass.

(II) Vulcanized Rubber Powder

As described above, in the present disclosure, the tread rubber composition contains vulcanized rubber powder. As the vulcanized rubber powder, commercially available vulcanized rubber powder obtained by crushing used tires with a roll machine, a grinder, or the like and then sieving the crushed matter to a predetermined particle diameter may be used, but vulcanized rubber powder obtained by vulcanizing, crushing, and sieving a separately formulated rubber composition may be used as necessary. As described above, the particle size of the vulcanized rubber powder is preferably a particle size finer than 30 mesh pass and coarser than 250 mesh pass obtained through a test sieve specified in JIS Z8801-1.

Containing the vulcanized rubber powder may decrease the reinforcing properties of the tire, which may lead to a decrease in the durability of the tire. Therefore, the amount of the vulcanized rubber powder per 100 parts by mass of the rubber component is, for example, preferably not less than 5 parts by mass, more preferably not less than 20 parts by mass, and further preferably not less than 40 parts by mass. On the other hand, the amount of the vulcanized rubber powder is preferably not greater than 100 parts by mass, more preferably not greater than 90 parts by mass, and further preferably not greater than 80 parts by mass.

Moreover, if silica is also contained in the vulcanized rubber powder, a further decrease in the 30°C tanδ of the entire rubber layer is expected. Therefore, vulcanized rubber powder containing silica is preferably used.

Preferably, the silica content of the vulcanized rubber powder is substantially equal to that of the portion other than the vulcanized rubber powder. However, since the degree of contribution of the vulcanized rubber powder to the entire cap rubber layer is lower than that of the portion other than the vulcanized rubber powder, vulcanized rubber powder having a lower silica content than the portion other than the vulcanized rubber powder may be used.

The amount of the vulcanized rubber powder is adjusted as appropriate such that the above occupation area ratio meets the above-described range.

(III) Plasticizer Component

In the rubber composition, a plasticizer component is preferably used as necessary. The amount of the plasticizer component per 100 parts by mass of the rubber component is preferably not less than 20 parts by mass, more preferably not less than 30 parts by mass, and further preferably not less than 40 parts by mass. On the other hand, the upper limit of the amount of the plasticizer component is not particularly limited, but the amount of the plasticizer component is preferably not greater than 70 parts by mass, more preferably not greater than 60 parts by mass, and further preferably not greater than 50 parts by mass. Accordingly, during mixing, the vulcanized rubber powder can be appropriately dispersed. Here, the plasticizer component refers to a component that plasticizes the rubber composition, such as process oil, extender oil of the rubber component, liquid rubber, and a resin component.

(i) Oil

Examples of the oil include mineral oils (generally called process oils), vegetable oils, and mixtures thereof. Among them, vegetable oils are preferably used from the viewpoint that the molecular weight is high, shift at the rubber layer interface, etc., is easily suppressed, and grip performance on the tread surface is easily maintained.

Examples of the mineral oils (process oils) include paraffinic process oil, aromatic process oil, naphthenic process oil. Examples of the vegetable oils include castor oil, cotton seed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. These oils may be used individually, or two or more of these oils may be used in combination.

Moreover, as these oils, from the viewpoint of life cycle assessment, lubricating oil that has been used for mixers such as a rubber mixing machine, engines, etc., waste cooking oil that has been used in restaurants and the like, etc., may be refined and used as appropriate.

As the mineral oils (process oils), for example, products of Idemitsu Kosan Co., Ltd., Sankyo Yuka Kogyo K.K., ENEOS Corporation, Olisoy, H&R, Hokoku Corporation, FUJI KOSAN COMPANY, LTD., etc., can be used.

(ii) Liquid Rubber

The liquid rubber is a polymer in a liquid state at room temperature (25°C), and is a rubber component that can be extracted from the tire after vulcanization, by extraction with acetone. Examples of the liquid rubber include a farnesene-based polymer, a liquid diene-based polymer, and hydrogenated products thereof.

The farnesene-based polymer is a polymer obtained by polymerizing farnesene, and has a structural unit based on farnesene. As farnesene, there are isomers such as α-farnesene ((3E,7E)-3,7,11-trimethyl-1,3,6,10-dodecatetraene) and β-farnesene (7,11-dimethyl-3-methylene-1,6,10-dodecatriene).

The farnesene-based polymer may be a homopolymer of farnesene (farnesene homopolymer), or a copolymer of farnesene and a vinyl monomer (farnesene-vinyl monomer copolymer).

Examples of the liquid diene-based polymer include liquid styrene-butadiene copolymers (liquid SBRs), liquid butadiene polymers (liquid BRs), liquid isoprene polymers (liquid IRs), and liquid styrene-isoprene copolymers (liquid SIRs).

The liquid diene-based polymer is, for example, a polymer having a weight-average molecular weight (Mw) of greater than $1.0\times10^3$ and less than $2.0\times10^5$, measured by gel permeation chromatography (GPC) in terms of polystyrene. In the present description, the Mw of the liquid diene-based polymer is a value that is measured by gel permeation chromatography (GPC) and obtained by polystyrene conversion.

The amount of the liquid rubber (total amount of a liquid farnesene-based polymer, a liquid diene-based polymer, etc.) per 100 parts by mass of the rubber component is, for example, greater than 1 part by mass and less than 100 parts by mass.

As the liquid rubber, for example, products of KURARAY CO., LTD., Cray Valley, etc., can be used.

(iii) Resin Component

The resin component also functions as an adhesiveness imparting component, and may be solid or liquid at room temperature. Specific examples of the resin component include resins such as rosin-based resins, styrene-based resins, coumarone-based resins, terpene-based resins, C5 resins, C9 resins, C5C9 resins, and acrylic-based resins, and two or more of these resins may be used in combination. The amount of the resin component per 100 parts by mass of the rubber component is preferably greater than 2 parts by mass and less than 45 parts by mass, and more preferably less than 30 parts by mass.

The rosin-based resins refer to resins that are obtained by processing pine resin and contain rosin acid as a main component. The rosin-based resins (rosins) can be classified depending on whether the rosins are modified or not, that is, can be classified into non-modified rosins (unmodified rosins) and modified rosin products (rosin derivatives). Examples of non-modified rosins include tall rosin (also called tall oil rosin), gum rosin, wood rosin, disproportionated rosins, polymerized rosins, hydrogenated rosins, and other chemically altered rosins. The modified rosin products are products obtained by modifying non-modified rosins, and examples of modified rosin products include rosin esters, unsaturated carboxylic acid-modified rosins, unsaturated carboxylic acid-modified rosin esters, amide compounds of rosins, and amine salts of rosins.

The styrene-based resins are each a polymer for which a styrene-based monomer is used as a constituent monomer, and examples of the styrene-based resins include a polymer obtained by polymerization with a styrene-based monomer as a main component (not less than 50% by mass). Specific examples of the styrene-based resins include homopolymers obtained by individually polymerizing styrene-based monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.), copolymers each obtained by copolymerizing two or more styrene-based monomers, and copolymers of styrene-based monomers and other monomers that can be copolymerized with styrene-based monomers.

Examples of the other monomers include: acrylonitriles such as acrylonitrile and methacrylonitrile; acrylics; unsaturated carboxylic acids such as methacrylic acid; unsaturated carboxylic acid esters such as methyl acrylate and methyl methacrylate; dienes such as chloroprene and butadiene isoprene; olefins such as 1-butene and 1-pentene; and α, β-unsaturated carboxylic acids or acid anhydrides thereof such as maleic anhydride.

Among the coumarone-based resins, coumarone-indene resins are preferable. The coumarone-indene resins are each a resin containing coumarone and indene as monomer components that form the skeleton (main chain) of the resin. Examples of the monomer components contained in the skeleton other than coumarone and indene include styrene, α-methylstyrene, methylindene, and vinyltoluene.

The amount of the coumarone-indene resin per 100 parts by mass of the rubber component is, for example, greater than 1.0 part by mass and less than 50.0 parts by mass.

The hydroxyl value (OH value) of the coumarone-indene resin is, for example, greater than 15 mg KOH/g and less than 150 mg KOH/g. The OH value is represented, in milligrams, as an amount of potassium hydroxide that is required to neutralize acetic acid bound to hydroxyl groups when 1 g of the resin is acetylated, and is a value measured by potentiometric titration (JIS K 0070: 1992).

The softening point of the coumarone-indene resin is, for example, higher than 30°C and lower than 160°C. The softening point is a softening point that is measured with a ring and ball softening point measuring device according to JIS K6220-1: 2001 and that is a temperature at which a ball has descended.

Examples of the terpene-based resins include polyterpenes, terpene phenols, and aromatic modified terpene resins. The polyterpenes are resins obtained by polymerizing terpene compounds, and hydrogenated products thereof. The above terpene compounds are hydrocarbons represented by a composition of $(C_5H_8)_n$ and oxygenated derivatives thereof, and are compounds having, as a basic skeleton, a terpene classified into monoterpene ($C_{10}H_{16}$), sesquiterpene ($C_{15}H_{24}$), diterpene ($C_{20}H_{32}$), and the like. Examples of the terpene compounds include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol.

Examples of the polyterpenes include terpene resins formed from the above-described terpene compounds such as α-pinene resin, β-pinene resin, limonene resin, dipentene resin, and β-pinene-limonene resin, and hydrogenated terpene resins obtained by hydrogenating the terpene resins. Examples of the terpene phenols include resins obtained by copolymerization of the above terpene compound and a phenolic compound, and resins obtained by hydrogenating the resins, and specific examples of the terpene phenols include resins obtained by condensation of the above terpene compound, a phenolic compound, and formalin. Examples of the phenolic compounds include phenol, bisphenol A, cresol, and xylenol. Examples of the aromatic modified terpene resins include resins obtained by modifying a terpene resin with an aromatic compound, and resins obtained by hydrogenating the resins. Here, the aromatic compound is not particularly limited as long as the aromatic compound is a compound having an aromatic ring. Examples of the aromatic compound include: phenolic compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene derivatives such as styrene, alkylstyrenes, alkoxystyrenes, and unsaturated hydrocarbon group-containing styrenes; coumarone; and indene.

The "C5 resins" refer to resins obtained by polymerizing a C5 fraction. Examples of the C5 fraction include petroleum fractions having 4 to 5 carbon atoms such as cyclopentadiene, pentene, pentadiene, and isoprene. As the C5 resins, dicyclopentadiene resins (DCPD resins) are suitably used.

The "C9 resins" refer to resins obtained by polymerizing a C9 fraction, and may be hydrogenated or modified products of the resins. Examples of the C9 fraction include petroleum fractions having 8 to 10 carbon atoms such as vinyltoluene, alkylstyrene, indene, and methylindene. As specific examples of the C9 resins, coumarone-indene resins, coumarone resins, indene resins, and aromatic vinyl-based resins are suitably used. As the aromatic vinyl-based resin, a homopolymer of $\alpha$-methylstyrene (AMS resin) or styrene or a copolymer of $\alpha$-methylstyrene and styrene is preferable, and a copolymer of $\alpha$-methylstyrene and styrene is more preferable, for the reasons that the polymer is economic, is easily processed, and has excellent heat generation properties. As the aromatic vinyl-based resins, for example, products commercially available from Kraton Corporation, Eastman Chemical Company, etc., can be used.

The "C5C9 resins" refer to resins obtained by copolymerizing the C5 fraction and the C9 fraction, and may be hydrogenated or modified products of the resins. Examples of the C5 fraction and the C9 fraction include the above-described petroleum fractions. As the C5C9 resins, for example, products commercially available from Tosoh Corporation, Zibo Luhua Hongjin New Material Group Co., Ltd., etc., can be used.

The acrylic-based resins are not particularly limited, and, for example, a non-solvent type acrylic-based resin can be used.

An example of the non-solvent type acrylic-based resin is a (meth)acrylic-based resin (polymer) synthesized by a high-temperature continuous polymerization method (high-temperature continuous bulk polymerization method) (the methods disclosed in US Patent No. 4,414,370, Japanese Laid-Open Patent Publication No. S59-6207, Japanese Examined Patent Publication No. H5-58005, Japanese Laid-Open Patent Publication No. H1-313522, US Patent No. 5,010,166, annual research report of Toagosei Co., Ltd., TREND 2000, No. 3, pages 42-45, etc.) by avoiding use of a polymerization initiator, a chain transfer agent, an organic solvent, etc., which are sub-materials, as much as possible. In the present disclosure, (meth)acrylic means methacrylic and acrylic.

Examples of the monomer component that forms the acrylic-based resin include (meth)acrylic acids, (meth)acrylic acid esters (alkyl esters, aryl esters, aralkyl esters, etc.), (meth)acrylamide, and (meth)acrylic acid derivatives such as (meth)acrylamide derivatives.

Moreover, as the monomer component that forms the acrylic-based resin, an aromatic vinyl such as styrene, $\alpha$-methylstyrene, vinyltoluene, vinylnaphthalene, divinylbenzene, trivinylbenzene, and divinylnaphthalene may be used together with (meth)acrylic acid or a (meth)acrylic acid derivative.

The acrylic-based resin may be a resin composed of only a (meth)acrylic component, or may be a resin also containing a component other than the (meth)acrylic component. In addition, the acrylic-based resin may have a hydroxyl group, a carboxyl group, a silanol group, or the like.

As the resin component, for example, products of Maruzen Petrochemical Co., Ltd., Sumitomo Bakelite Co., Ltd., Yasuhara Chemical Co., Ltd., Tosoh Corporation, Rutgers Chemicals AG, BASF, Arizona Chemical Company, NITTO CHEMICAL CO., LTD., NIPPON SHOKUBAI CO., LTD., ENEOS Corporation, Arakawa Chemical Industries, Ltd., Taoka Chemical Co., Ltd., etc., can be used.

(IV) Wax

The rubber composition preferably contains a wax. The amount of the wax per 100 parts by mass of the rubber component is, for example, 0.5 to 20 parts by mass, preferably 1.0 to 15 parts by mass, and more preferably 1.5 to 10 parts by mass.

The wax is not particularly limited, and examples of the wax include: petroleum waxes such as paraffin wax and microcrystalline wax; natural waxes such as vegetable wax and animal wax; and synthesized waxes such as polymers of ethylene, propylene, and the like. These waxes may be used individually, or two or more of these waxes may be used in combination.

As the wax, for example, products of Ouchi Shinko Chemical Industrial Co., Ltd., NIPPON SEIRO CO., LTD., Seiko Chemical Co., Ltd., etc., can be used.

(V) Antioxidant

The rubber composition preferably contains an antioxidant. The amount of the antioxidant per 100 parts by mass of the rubber component is, for example, greater than 1 part by mass and less than 10 parts by mass.

Examples of the antioxidant include: naphthylamine-based antioxidants such as phenyl-$\alpha$-naphthylamine;

diphenylamine-based antioxidants such as octylated diphenylamine and 4,4'-bis($\alpha$,$\alpha$'-dimethylbenzyl)diphenylamine; p-phenylenediamine-based antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol-based antioxidants such as 2,6-di-t-butyl-4-methylphenol and styrenated phenol; and bis-, tris-, and poly-phenol-based antioxidants such as tetrakis-[methylene-3-(3',5'-di-t-butyl-4'-hydroxyphenyl)propionate]methane. These antioxidants may be used individually, or two or more of these antioxidants may be used in combination.

As the antioxidant, for example, products of Seiko Chemical Co., Ltd., SUMITOMO CHEMICAL COMPANY, LIMITED, Ouchi Shinko Chemical Industrial Co., Ltd., Flexsys, etc., can be used.

(VI) Lubricant

The rubber composition may contain a lubricant. As the lubricant, a lubricant based on a fatty acid derivative such as stearic acid is preferable, and specifically, as the stearic acid, for example, products of NOF Corporation, Kao Corporation, FUJIFILM Wako Pure Chemical Corporation, New Japan Chemical Co., Ltd., etc., can be used, and Struktol WB16 manufactured by Struktol Company of America, etc., can also be used. The amount of the lubricant per 100 parts by mass of the rubber component is preferably not less than 0.1 parts by mass and not greater than 3 parts by mass, more preferably not less than 0.5 parts by mass and not greater than 2.5 parts by mass, and further preferably not less than 1.0 part by mass and not greater than 2.0 parts by mass.

(VII) Zinc Oxide

The rubber composition may contain zinc oxide. The amount of the zinc oxide per 100 parts by mass of the rubber component is, for example, greater than 0.5 parts by mass and less than 15 parts by mass. As the zinc oxide, a conventionally known one can be used, and, for example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used.

(VIII) Crosslinking Agent and Vulcanization Accelerator

The rubber composition preferably contains a crosslinking agent such as sulfur. The amount of the crosslinking agent per 100 parts by mass of the rubber component is, for example, greater than 0.1 parts by mass and less than 10.0 parts by mass.

Examples of the sulfur include powdery sulfur, precipitated sulfur, colloidal sulfur, insoluble sulfur, highly dispersible sulfur, and soluble sulfur, which are generally used in the rubber industry. These sulfurs may be used individually, or two or more of these sulfurs may be used in combination.

As the sulfur, for example, products of Tsurumi Chemical Industry Co., ltd., Karuizawa Sulfur Co., Ltd., SHIKOKU CHEMICALS CORPORATION, Flexsys, Nippon Kanryu Industry Co., Ltd., Hosoi Chemical Industry Co., Ltd., etc., can be used.

The tread rubber composition preferably contains a vulcanization accelerator. The amount of the vulcanization accelerator per 100 parts by mass of the rubber component is, for example, greater than 0.3 parts by mass and less than 10.0 parts by mass.

Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used individually, or two or more of these vulcanization accelerators may be used in combination.

(IX) Others

In addition to the above-described components, additives generally used in the tire industry, such as fatty acid metal salts, carboxylic acid metal salts, and organic peroxides, may be further blended in the tread rubber composition. The amount of each of these additives per 100 parts by mass of the rubber component is, for example, greater than 0.1 parts by mass and less than 50 parts by mass.

(2) Production of Tread Rubber Composition

The tread rubber composition is produced by a general method; for example, a production method including a base kneading step of kneading a rubber component, vulcanized rubber powder, and a filler such as silica and a finish kneading step of kneading a crosslinking agent and a kneaded product obtained in the base kneading step.
The kneading can be performed by using, for example, a known (sealed type) kneading machine such as a Banbury mixer, a kneader, and an open roll.
In the base kneading step, the kneading temperature is, for example, higher than 50°C and lower than 200°C, and the kneading time is, for example, longer than 30 seconds and shorter than 30 minutes. In the base kneading step, in addition to the above components, ingredients that are conventionally used in the rubber industry, for example, a plasticizer such as an oil, stearic acid, zinc oxide, an antioxidant, a wax, a vulcanization accelerator, etc., may be appropriately added and kneaded as necessary.
In the finish kneading step, the crosslinking agent and the kneaded product obtained in the base kneading step are kneaded. In the finish kneading step, the kneading temperature is, for example, higher than room temperature and lower than 80°C, and the kneading time is, for example, longer than 1 minute and shorter than 15 minutes. In the finish kneading step, in addition to the above components, a vulcanization accelerator, zinc oxide, etc., may be appropriately added and kneaded as necessary.
Then, the obtained rubber composition is extruded into a predetermined shape to be molded into a tread.

2. Production of Tire

As for the tire of the present disclosure, first, an unvulcanized tire is produced through forming on a tire forming machine by a normal method.
Specifically, an unvulcanized tire is produced by winding, on a forming drum, an inner liner as a member for ensuring the airtightness of the tire, a carcass as a member for withstanding the load, impact, and filling air pressure received by the tire, a belt member as a member for strongly tightening the carcass to increase the stiffness of a tread, etc., placing bead portions as members for fixing both ends of the carcass to both side edge portions and fixing the tire to a rim, forming these members into a toroid shape, then attaching a tread to a center portion of the outer periphery, and attaching sidewalls on the radially outer side to form side portions.
Thereafter, a tire is obtained by heating and pressurizing the produced unvulcanized tire in a vulcanizing machine. The vulcanization step can be carried out by applying known vulcanization means. The vulcanization temperature is, for example, higher than 120°C and lower than 200°C, and the vulcanization time is, for example, longer than 5 minutes and shorter than 15 minutes.
As described above, the obtained tire has sufficiently improved responsiveness and grip performance on a wet road surface, and therefore can exhibit excellent steering stability on a wet road surface during high speed running.

EXAMPLES

Hereinafter, the present disclosure will be further specifically described by means of examples. In the following, tires having a size of 205/55R16 in each of which a tread portion is formed of only one layer of cap rubber are produced and evaluated for steering stability on a wet road surface during high speed running.

1. Production of Tread Rubber Composition

Prior to tire production, first, a tread rubber composition for forming a cap rubber layer is produced.

(1) Blending Materials

First, each blending material described below is prepared.

(a) Rubber Component

(I) NR: SVR-L
(II-1) SBR 1: TUFDENE 3830 (S-SBR) manufactured by Asahi Kasei Corporation
(styrene content: 33% by mass, vinyl bond content: 31% by mass, 37.5% oilextended product)
(II-2) SBR 2: SBR 1502 (E-SBR) manufactured by JSR Corporation

(styrene content: 24% by mass, vinyl bond content: 16% by mass, non-oil-extended)
(II-3) SBR 3: HPR 840 manufactured by JSR Corporation
(styrene ratio: 10% by mass, vinyl bond content: 42% by mass, modified, non-oil-extended)
(III) BR: BR 150B (high-cis BR) manufactured by UBE Corporation
(cis content: 97% by mass, trans content: 2% by mass, vinyl content: 1% by mass)

(b) Blending Materials Other Than Rubber Component

(I) Carbon black: SHOBLACK N220 manufactured by Cabot Japan K.K. ($N_2SA$: 111 $m^2/g$)
(II-1) Silica-1: ULTRASIL VN3 manufactured by Evonik Industries Ag ($N_2SA$: 175 $m^2/g$, average primary particle diameter: 18 nm)
(II-2) Silica-2: ULTRASIL 9100Gr manufactured by Evonik Industries Ag ($N_2SA$: 230 $m^2/g$, average primary particle diameter: 15 nm)
(III-1) Silane coupling agent-1: Si 266 manufactured by Evonik Industries Ag (bis(3-triethoxysilylpropyl)disulfide)
(III-2) Silane coupling agent-2: NXT manufactured by Momentive Performance Materials, Inc.
(mercapto silane coupling agent having a thiocarbonyl group)
(IV) Vulcanized rubber powder: vulcanized rubber powder having a silica content of 40 wt% (see the next section (c) for the production method)
(V) Oil: Diana Process Oil NH-70S manufactured by Idemitsu Kosan Co., Ltd. (aromatic process oil)
(VI) Vegetable oil: sunflower oil manufactured by The Nisshin OilliO Group, Ltd. (glycerol fatty acid triester)
(VII) Liquid BR: Ricon 130 manufactured by Cray Valley (number-average molecular weight: 2500)
(VIII) Resin: Syltraxx 4401 manufactured by Arizona Chemical Company ($\alpha$-methylstyrene-based resin, softening point: 85°C)
(IX) Zinc oxide: Zinc Oxide Type-1 manufactured by Mitsui Mining & Smelting Co., Ltd.
(X-1) Antioxidant 1: NOCRAC 6C manufactured by Ouchi Shinko Chemical Industrial Co., Ltd.
(N-phenyl-N'-(1,3-dimethylbutyl)-p-phenylenediamine)
(X-2) Antioxidant 2: NOCRAC FR manufactured by Ouchi Shinko Chemical Industrial Co., Ltd.
(2,2,4-trimethyl-1,2-dihydroquinoline polymer)
(XI) Stearic acid: stearic acid "Camellia" manufactured by NOF Corporation
(XII) Wax: OZOACE-0355 manufactured by NIPPON SEIRO CO., LTD.
(XIII) Sulfur: 5% oil-treated powdery sulfur manufactured by Tsurumi Chemical Industry Co., Ltd.
(XIV-1) Vulcanization accelerator-1: NOCCELER D (DPG) manufactured by Ouchi Shinko Chemical Industrial Co., Ltd.
(3-diphenylguanidine)
(XIV-2) Vulcanization accelerator-2: NOCCELER CZ manufactured by Ouchi Shinko Chemical Industrial Co., Ltd.
(N-cyclohexyl-2-benzothiazolyl sulfenamide)

(c) Production of Vulcanized Rubber Powder

The above-described vulcanized rubber powder is produced according to the following procedure.
First, a kneaded product is obtained by kneading the materials other than the sulfur and the vulcanization accelerators under a condition of 150°C for 5 minutes by using a Banbury mixer in accordance with a blending formula shown in Table 1, then adding the sulfur and the vulcanization accelerators, and kneading the mixture under a condition of 80°C for 5 minutes by using an open roll. The unit of each blending amount is parts by mass.
Next, the obtained kneaded product is vulcanized under a condition of 170°C for 20 minutes to obtain a rubber plate. Then, the obtained rubber plate is roll-crushed and sieved through a 30-mesh sieve, thereby obtaining vulcanized rubber powder having a silica content of 40 wt%.

[Table 1]

| | Blending amount |
|---|---|
| SBR | 50 |
| NR | 30 |
| BR | 20 |

(continued)

| | Blending amount |
|---|---|
| Carbon black | 5 |
| Silica-1 | 82 |
| Silane coupling agent | 8.2 |
| Zinc oxide | 2.4 |
| Stearic acid | 1.5 |
| Sulfur | 1.5 |
| Vulcanization accelerator-1 | 2 |
| Vulcanization accelerator-2 | 1 |

(2) Production of Tread Rubber Composition

A kneaded product is obtained by kneading the materials other than the sulfur and the vulcanization accelerators under a condition of 150°C for 5 minutes by using a Banbury mixer in accordance with each of blending formulas shown in Table 2 to Table 4. The unit of each blending amount is parts by mass.

Next, the sulfur and the vulcanization accelerators are added to the obtained kneaded product, and the mixture is kneaded under a condition of 80°C for 5 minutes by using an open roll, to obtain each tread rubber composition.

2. Production of Cap Rubber and Tire

The obtained respective tread rubber compositions are extruded into a predetermined shape to produce cap rubbers. The obtained cap rubbers are attached together with other tire members to form unvulcanized tires. Then, the unvulcanized tires are pressvulcanized under a condition of 170°C for 10 minutes to produce test tires of Example 1 to Example 16 and Comparative Example 1 to Comparative Example 9.

3. Calculation of Parameters

Next, each of the following parameters is obtained for each of the test tires.

(1) Area Ratio S of Vulcanized Rubber Powder

First, an observation sample is cut out from the cap rubber layer of each test tire such that a surface parallel to the tread surface become an observation cross-section.

Next, the observation cross-section of each sample is imaged by using a scanning electron microscope (Teneo manufactured by Thermo Fisher) at an acceleration voltage of 15 kV to obtain an electron microscope image at a magnification of 50 times.

Next, the area of the domain corresponding to the vulcanized rubber powder is calculated in a range of 2.54 mm × 1.69 mm of the obtained electron microscope image, and the ratio of the area of the domain to the area of the entire cross-section is calculated. This is performed in three visual fields per sample, and the average value of the calculated ratios is regarded as the area ratio S (%) of the vulcanized rubber powder.

The results are shown in Table 2 to Table 4. For the test tires for which the same blending formula is used, the same measurement is performed on each tire, and the obtained results are averaged again to obtain the area ratio of the vulcanized rubber powder for each blending formula.

(2) Loss Tangent (30°C tanδ)

A rubber test piece for measurement is prepared by cutting out a piece from the cap rubber layer of each test tire in a length of 20 mm × a width of 4 mm × a thickness of 1 mm such that the tire circumferential direction is the direction of the long side. For each rubber test piece, a loss tangent (30°C tanδ) is measured, using EPLEXOR series manufactured by NETZSCH-Gerätebau GmbH, under the conditions of 30°C, a frequency of 10 Hz, an initial strain of 5%, and a dynamic strain rate of 1% with deformation mode: tension.

The results are shown in Table 2 to Table 4. For the test tires for which the same blending formula is used, the

same measurement is performed on each tire, and the obtained results are averaged to obtain 30°C tanδ for each blending formula.

(3) Groove Depth

Each test tire is brought into a standardized state, and the height from the groove bottom to the opening of the circumferential main groove is measured under no load and is regarded as a groove depth D (mm). The results are shown in Table 2 to Table 4.

(4) Tread Gauge

Each test tire is cut along the tire radial direction, and the thickness of the tread portion on the equator plane in the cross-section thereof is measured and is regarded as a tread gauge G (mm). The results are shown in Table 2 to Table 4.

(5) Other Parameters

Next, (S/D), (S/G), and (30°C tanδ × G) are calculated using the area ratio S (%), the 30°C tanδ, the groove depth D (mm), and the tread gauge G (mm) obtained above. In addition, the total rubber amount RR (parts by mass) of the NR, the SBR having a styrene content of not greater than 30%, and the BR in 100 parts by mass of the rubber component is obtained according to the following formula. The results are shown in Table 2 to Table 4.

RR = {NR amount + BR amount + SBR (Sty: ≤ 30) amount}/rubber component amount × 100

4. Performance Evaluation

The respective test tires are mounted to all the wheels of vehicles (rear wheel drive vehicles produced in Japan and having an engine displacement of 2000 cc), and filled with air such that the internal pressure of the front wheels is 230 kPa and the internal pressure of the rear wheels is 220 kPa. Then, each vehicle is driven around at a speed of 100 km/h on a road surface with water sprayed on the road surface, and the steering stability at that time is evaluated on a 5-point scale based on sensory evaluation by the driver. The same evaluation is made by 20 drivers, and the total value of obtained scores is calculated.

For the evaluation, the steering stability of each test tire on a wet road surface during high speed running is indexed based on the following formula with the total value of the scores of Comparative Example 9 being regarded as 100. A higher value indicates that the steering stability on a wet road surface during high speed running is better. The results are shown in Table 2 to Table 4.

Steering stability on wet road surface during high speed running = (total value of scores of Comparative Example 9/total value of scores ot test tire) × 100

[Table 2]

| | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|
| (Blending formula) | | | | | | | | | | |
| R | 40 | 40.00 | 40.00 | 40.00 | 40.00 | 40.00 | 40.00 | 40.00 | 40.00 | 40.00 |
| SBR-1 | 41.25 | - | - | - | - | - | - | - | - | - |
| SBR-2 | - | 30.00 | 30.00 | 30.00 | - | - | - | - | - | - |
| SBR-3 | - | - | - | - | 30.00 | 30.00 | 30.00 | 30.00 | 30.00 | 30.00 |
| BR | 30 | 30.00 | 30.00 | 30.00 | 30.00 | 30.00 | 30.00 | 30.00 | 30.00 | 30.00 |
| Carbon black | 60 | 60.00 | 5.00 | 5.00 | 5.00 | 5.00 | 5.00 | 5.00 | 5.00 | 5.00 |

(continued)

| | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|
| (Blending formula) | | | | | | | | | | |
| Silica-1 | - | - | 55.00 | 55.00 | 55.00 | 55.00 | 55.00 | 55.00 | 55.00 | 55.00 |
| Silica-2 | - | - | - | - | - | - | - | - | - | - |
| Coupling agent-1 | - | - | 4.40 | - | - | - | - | - | - | - |
| Coupling agent-2 | - | - | - | 4.40 | 4.40 | 4.40 | 4.40 | 4.40 | 4.40 | 4.40 |
| Vulcanized rubber powder | 8 | 8.00 | 8.00 | 8.00 | 8.00 | 35.40 | 76.25 | 8.00 | 10.00 | 15.00 |
| Oil | 30 | 41.25 | 41.25 | 41.25 | 41.25 | 41.25 | 41.25 | 41.25 | 41.25 | 41.25 |
| Vegetable oil | - | - | - | - | - | - | - | - | - | - |
| Liquid BR | - | - | - | - | - | - | - | - | - | - |
| Resin | - | - | - | - | - | - | - | - | - | - |
| Zinc oxide | 2 | 2.00 | 2.00 | 2.00 | 2.00 | 2.00 | 2.00 | 2.00 | 2.00 | 2.00 |
| Antioxidant-1 | 2 | 2.00 | 2.00 | 2.00 | 2.00 | 2.00 | 2.00 | 2.00 | 2.00 | 2.00 |
| Antioxidant-2 | 1 | 1.00 | 1.00 | 1.00 | 1.00 | 1.00 | 1.00 | 1.00 | 1.00 | 1.00 |
| Stearic acid | 2 | 2.00 | 2.00 | 2.00 | 2.00 | 2.00 | 2.00 | 2.00 | 2.00 | 2.00 |
| Wax | 2 | 2.00 | 2.00 | 2.00 | 2.00 | 2.00 | 2.00 | 2.00 | 2.00 | 2.00 |
| Sulfur | 1.5 | 1.50 | 1.50 | 1.50 | 1.50 | 1.50 | 1.50 | 1.50 | 1.50 | 1.50 |
| Accelerator-1 | 2 | 2.00 | 2.00 | 2.00 | 2.00 | 2.00 | 2.00 | 2.00 | 2.00 | 2.00 |
| Accelerator-2 | 2 | 2.00 | 2.00 | 2.00 | 2.00 | 2.00 | 2.00 | 2.00 | 2.00 | 2.00 |
| (Parameter) | | | | | | | | | | |
| Area ratio S (%) | 5.35 | 5.35 | 5.35 | 5.35 | 5.54 | 20.62 | 35.88 | 5.54 | 6.84 | 9.92 |
| 30°C tan$\delta$ | 0.14 | 0.13 | 0.12 | 0.11 | 0.10 | 0.10 | 0.10 | 0.10 | 0.10 | 0.10 |
| Groove depth D (mm) | 5.50 | 5.50 | 5.50 | 5.50 | 5.50 | 5.50 | 5.50 | 6.50 | 6.50 | 8.00 |
| Tread gauge G (mm) | 10.00 | 10.00 | 10.00 | 10.00 | 10.00 | 10.00 | 10.00 | 10.00 | 10.00 | 10.00 |
| S/D | 0.97 | 0.97 | 0.97 | 0.97 | 1.01 | 3.75 | 6.52 | 0.85 | 1.05 | 1.24 |
| S/G | 0.53 | 0.53 | 0.53 | 0.53 | 0.55 | 2.06 | 3.59 | 0.55 | 0.68 | 0.99 |
| 30°C tan$\delta \times$ G | 1.40 | 1.30 | 1.20 | 1.10 | 1.00 | 1.00 | 1.00 | 1.00 | 1.00 | 1.00 |
| RR (parts by mass) | 70.00 | 100.00 | 100.00 | 100.00 | 94.00 | 94.00 | 94.00 | 94.00 | 94.00 | 94.00 |
| (Performance evaluation) | | | | | | | | | | |
| Steering stability on wet road surface during high speed running | 106 | 110 | 114 | 122 | 126 | 138 | 140 | 122 | 130 | 134 |

[Table 3]

| | Ex. 11 | Ex. 12 | Ex. 13 | Ex. 14 | Ex. 15 | Ex. 16 |
|---|---|---|---|---|---|---|
| (Blending formula) | | | | | | |
| R | 40.00 | 40.00 | 40.00 | 40.00 | 40.00 | 40.00 |
| SBR-1 | - | - | - | - | - | - |
| SBR-2 | - | - | - | - | - | - |

(continued)

| | Ex. 11 | Ex. 12 | Ex. 13 | Ex. 14 | Ex. 15 | Ex. 16 |
|---|---|---|---|---|---|---|
| (Blending formula) | | | | | | |
| SBR-3 | 30.00 | 30.00 | 30.00 | 30.00 | 30.00 | 30.00 |
| BR | 30.00 | 30.00 | 30.00 | 30.00 | 30.00 | 30.00 |
| Carbon black | 5.00 | 5.00 | 5.00 | 5.00 | 5.00 | 5.00 |
| Silica-1 | 55.00 | 55.00 | 55.00 | 55.00 | 55.00 | - |
| Silica-2 | - | - | - | - | - | 55.00 |
| Coupling agent-1 | - | - | - | - | - | - |
| Coupling agent-2 | 4.40 | 4.40 | 4.40 | 4.40 | 4.40 | 4.40 |
| Vulcanized rubber powder | 8.00 | 8.00 | 8.00 | 8.00 | 8.00 | 8.00 |
| Oil | 41.25 | 41.25 | 41.25 | 41.25 | 41.25 | 41.25 |
| Vegetable oil | - | - | 100 | - | - | - |
| Liquid BR | - | - | - | 100 | - | - |
| Resin | - | - | - | - | 100 | - |
| Zinc oxide | 2.00 | 2.00 | 2.00 | 2.00 | 2.00 | 2.00 |
| Antioxidant-1 | 2.00 | 2.00 | 2.00 | 2.00 | 2.00 | 2.00 |
| Antioxidant-2 | 1.00 | 1.00 | 1.00 | 1.00 | 1.00 | 1.00 |
| Stearic acid | 2.00 | 2.00 | 2.00 | 2.00 | 2.00 | 2.00 |
| Wax | 2.00 | 2.00 | 2.00 | 2.00 | 2.00 | 2.00 |
| Sulfur | 1.50 | 1.50 | 1.50 | 1.50 | 1.50 | 1.50 |
| Accelerator-1 | 2.00 | 2.00 | 2.00 | 2.00 | 2.00 | 2.00 |
| Accelerator-2 | 2.00 | 2.00 | 2.00 | 2.00 | 2.00 | 2.00 |
| (Parameter) | | | | | | |
| Area ratio S (%) | 5.54 | 5.54 | 5.54 | 5.54 | 5.54 | 5.54 |
| 30°C tanδ | 0.10 | 0.10 | 0.10 | 0.09 | 0.11 | 0.09 |
| Groove depth D (mm) | 5.50 | 5.50 | 5.50 | 5.50 | 5.50 | 5.50 |
| Tread gauge G (mm) | 8.00 | 6.00 | 8.00 | 8.00 | 8.00 | 8.00 |
| S/D | 1.01 | 1.01 | 1.01 | 1.01 | 1.01 | 1.01 |
| S/G | 0.69 | 0.92 | 0.69 | 0.69 | 0.69 | 0.69 |
| 30°C tanδ × G | 0.80 | 0.60 | 0.80 | 0.72 | 0.88 | 0.72 |
| RR (parts by mass) | 94.00 | 94.00 | 94.00 | 94.00 | 94.00 | 94.00 |
| (Performance evaluation) | | | | | | |
| Steering stability on wet road surface during high speed running | 130 | 134 | 136 | 138 | 136 | 138 |

[Table 4]

| | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 |
|---|---|---|---|---|---|---|---|---|---|
| (Blending formula) | | | | | | | | | |
| NR | 40.00 | 40.00 | 40.00 | 40.00 | 40.00 | 40.00 | 40.00 | 40.00 | 40.00 |

(continued)

| | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 |
|---|---|---|---|---|---|---|---|---|---|
| (Blending formula) | | | | | | | | | |
| SBR-1 | 41.25 | 41.25 | 41.25 | 41.25 | 41.25 | - | - | - | - |
| SBR-2 | - | - | - | - | - | 30.00 | 30.00 | 30.00 | - |
| SBR-3 | - | - | - | - | - | - | - | - | 30.00 |
| BR | 30.00 | 30.00 | 30.00 | 30.00 | 30.00 | 30.00 | 30.00 | 30.00 | 30.00 |
| Carbon black | 60.00 | 60.00 | 70.00 | 60.00 | 60.00 | 60.00 | 5.00 | 5.00 | 5.00 |
| Silica-1 | - | - | - | - | - | - | 55.00 | 55.00 | 55.00 |
| Silica-2 | - | - | - | - | - | - | - | - | - |
| Coupling agent-1 | - | - | - | - | - | - | 4.40 | - | - |
| Coupling agent-2 | - | - | - | - | - | - | - | 4.40 | 4.40 |
| Vulcanized rubber powder | 7.00 | 150.00 | 8.00 | 8.00 | 8.00 | 7.00 | 7.00 | 7.00 | 7.00 |
| Oil | 30.00 | 30.00 | 30.00 | 30.00 | 30.00 | 41.25 | 41.25 | 41.25 | 41.25 |
| Vegetable oil | - | - | - | - | - | - | - | - | - |
| Liquid BR | - | - | - | - | - | - | - | - | - |
| Resin | - | - | - | - | - | - | - | - | - |
| Zinc oxide | 2.00 | 2.00 | 2.00 | 2.00 | 2.00 | 2.00 | 2.00 | 2.00 | 2.00 |
| Antioxidant-1 | 2.00 | 2.00 | 2.00 | 2.00 | 2.00 | 2.00 | 2.00 | 2.00 | 2.00 |
| Antioxidant-2 | 1.00 | 1.00 | 1.00 | 1.00 | 1.00 | 1.00 | 1.00 | 1.00 | 1.00 |
| Stearic acid | 2.00 | 2.00 | 2.00 | 2.00 | 2.00 | 2.00 | 2.00 | 2.00 | 2.00 |
| Wax | 2.00 | 2.00 | 2.00 | 2.00 | 2.00 | 2.00 | 2.00 | 2.00 | 2.00 |
| Sulfur | 1.50 | 1.50 | 1.50 | 1.50 | 1.50 | 1.50 | 1.50 | 1.50 | 1.50 |
| Accelerator-1 | 2.00 | 2.00 | 2.00 | 2.00 | 2.00 | 2.00 | 2.00 | 2.00 | 2.00 |
| Accelerator-2 | 2.00 | 2.00 | 2.00 | 2.00 | 2.00 | 2.00 | 2.00 | 2.00 | 2.00 |
| (Parameter) | | | | | | | | | |
| Area ratio S (%) | 4.71 | 51.44 | 5.05 | 5.35 | 5.35 | 4.71 | 4.71 | 4.71 | 4.89 |
| 30°C tan$\delta$ | 0.14 | 0.14 | 0.20 | 0.14 | 0.14 | 0.13 | 0.12 | 0.11 | 0.10 |
| Groove depth D (mm) | 5.50 | 5.50 | 5.50 | 4.00 | 8.00 | 5.50 | 5.50 | 5.50 | 5.50 |
| Tread gauge G (mm) | 8.00 | 10.00 | 10.00 | 13.00 | 12.00 | 8.00 | 8.00 | 8.00 | 8.00 |
| S/D | 0.86 | 9.35 | 0.92 | 1.34 | 0.67 | 0.86 | 0.86 | 0.86 | 0.89 |
| S/G | 0.59 | 5.14 | 0.50 | 0.41 | 0.45 | 0.59 | 0.59 | 0.59 | 0.61 |
| 30°C tan$\delta$ $\times$ G | 1.12 | 1.40 | 2.00 | 1.82 | 1.68 | 1.04 | 0.96 | 0.88 | 0.80 |
| RR (parts by mass) | 70.00 | 70.00 | 70.00 | 70.00 | 70.00 | 100.00 | 100.00 | 100.00 | 94.00 |

(continued)

| (Performance evaluation) | | | | | | | | | |
|---|---|---|---|---|---|---|---|---|---|
| Steering stability on wet road surface during high speed running | 80 | 80 | 76 | 80 | 84 | 84 | 88 | 96 | 100 |

From Table 2 to Table 4, it is found that each Example, in which the area ratio of the vulcanized rubber powder in the cap rubber layer is not less than 5% and not greater than 50%, the 30°C tanδ is not greater than 0.15, the groove depth of the circumferential main groove is greater than 6 mm, and the ratio (occupation area ratio/groove depth) of the area ratio of the vulcanized rubber powder to the groove depth is greater than 0.85 (%/mm), has excellent steering stability on a wet road surface during high speed running.

It is also found that further excellent steering stability on a wet road surface during high speed running is exhibited by appropriately controlling various parameters such that the total rubber amount of the NR, the SBR having a styrene content of not greater than 30%, and the BR in 100 parts by mass of the rubber component is not less than 90 parts by mass, silica is contained in an amount of not greater than 60 parts by mass in the cap rubber, a silane coupling agent having a thiocarbonyl group is used, S/D is not less than 1.0%/mm, S/G is not less than 0.6, etc.

## Claims

**1.** A pneumatic tire comprising a circumferential main groove on a tread portion, wherein

an outermost layer of the tread portion is formed by using a rubber composition containing vulcanized rubber powder,
an area ratio S (%) of the vulcanized rubber powder in a cross-section of the outermost layer is not less than 5% and not greater than 50%,
a loss tangent (30°C tanδ) of the rubber composition measured under conditions of 30°C, a frequency of 10 Hz, an initial strain of 5%, and a dynamic strain rate of 1% with deformation mode: tension is not greater than 0.15,
a groove depth D (mm) of the circumferential main groove is greater than 6 mm, and
$S/D > 0.85$ is satisfied.

**2.** The pneumatic tire according to claim 1, wherein the area ratio S (%) is not less than 20% and not greater than 40%.

**3.** The pneumatic tire according to claim 1 or 2, wherein the 30°C tanδ is not greater than 0.12.

**4.** The pneumatic tire according to any one of claims 1 to 3, wherein the S/D is not less than 1.0.

**5.** The pneumatic tire according to any one of claims 1 to 4, wherein the rubber composition contains, as a rubber component, a natural rubber (NR), a butadiene rubber (BR), and a styrene-butadiene rubber (SBR) having a styrene ratio of not greater than 30% by mass, and a total amount thereof in 100 parts by mass of the rubber component is not less than 90 parts by mass.

**6.** The pneumatic tire according to any one of claims 1 to 5, wherein the rubber composition contains silica in an amount of not greater than 60 parts by mass per 100 parts by mass of the rubber component.

**7.** The pneumatic tire according to any one of claims 1 to 6, wherein the rubber composition contains a silane coupling agent having a thiocarbonyl group.

**8.** The pneumatic tire according to any one of claims 1 to 7, wherein, when a thickness (gauge) on an equator plane of the tread portion is denoted by G (mm), the thickness (gauge) G and the area ratio S (%) satisfy $S/G \geq 0.6$.

**9.** The pneumatic tire according to any one of claims 1 to 8, wherein, in the tread portion, the 30°C tanδ and the thickness (gauge) G (mm) on the equator plane of the tread portion satisfy the following formula,

$$(30°C\ \tan\delta \times G) \leq 1.30.$$

**10.** The pneumatic tire according to claim 9, wherein the (30°C tanδ × G) is not greater than 1.10.

**11.** The pneumatic tire according to any one of claims 1 to 10, wherein a particle size of the vulcanized rubber powder is a particle size finer than 30 mesh pass and coarser than 250 mesh pass obtained through a test sieve specified in JIS Z8801-1.

**12.** The pneumatic tire according to any one of claims 1 to 11, wherein the rubber composition contains a liquid rubber.

**13.** The pneumatic tire according to claim 12, wherein the liquid rubber is a liquid butadiene polymer (liquid BR).

**14.** The pneumatic tire according to any one of claims 1 to 13, wherein the rubber composition contains a resin component.

**15.** The pneumatic tire according to any one of claims 1 to 14, wherein the rubber composition contains a vegetable oil.

**16.** The pneumatic tire according to any one of claims 1 to 15, wherein the vulcanized rubber powder contains silica.

**Patentansprüche**

**1.** Luftreifen, umfassend eine Umfangshauptrille auf einem Laufstreifenabschnitt, wobei

eine äußerste Schicht des Laufstreifenabschnitts unter Verwendung einer Kautschukzusammensetzung gebildet ist, die vulkanisiertes Kautschukpulver enthält,
ein Flächenanteil S (%) des vulkanisierten Kautschukpulvers in einem Querschnitt der äußersten Schicht nicht weniger als 5% und nicht mehr als 50% beträgt,
ein Verlusttangens (30°C tanδ) der Kautschukzusammensetzung, der unter Bedingungen von 30°C, einer Frequenz von 10 Hz, einer anfänglichen Dehnung von 5% und einer dynamischen Dehnungsrate von 1% im Verformungsmodus: Zug gemessen ist, nicht mehr als 0,15 beträgt,
eine Rillentiefe D (mm) der Umfangshauptrille mehr als 6 mm beträgt, und
S/D > 0,85 erfüllt ist.

**2.** Luftreifen nach Anspruch 1, wobei der Flächenanteil S (%) nicht weniger als 20% und nicht mehr als 40% beträgt.

**3.** Luftreifen nach Anspruch 1 oder 2, wobei der 30°C tanδ nicht mehr als 0,12 beträgt.

**4.** Luftreifen nach einem der Ansprüche 1 bis 3, wobei das S/D nicht weniger als 1,0 beträgt.

**5.** Luftreifen nach einem der Ansprüche 1 bis 4, wobei die Kautschukzusammensetzung als eine Kautschukkomponente einen Naturkautschuk (NR), einen Butadien-Kautschuk (BR) und einen StyrolButadien-Kautschuk (SBR) mit einem Styrol-Anteil von nicht mehr als 30 Massen-% enthält, und eine Gesamtmenge davon in 100 Massenteilen der Kautschukkomponente nicht weniger als 90 Massenteile beträgt.

**6.** Luftreifen nach einem der Ansprüche 1 bis 5, wobei die Kautschukzusammensetzung Siliziumdioxid in einer Menge von nicht mehr als 60 Massenteilen pro 100 Massenteile der Kautschukkomponente enthält.

**7.** Luftreifen nach einem der Ansprüche 1 bis 6, wobei die Kautschukzusammensetzung ein Silankopplungsmittel enthält, das eine Thiocarbonylgruppe aufweist.

**8.** Luftreifen nach einem der Ansprüche 1 bis 7, wobei, wenn eine Dicke (ein Maß) auf einer Äquatorebene des Laufstreifenabschnitts mit G (mm) bezeichnet ist, die Dicke (das Maß) G und der Flächenanteil S/G ≥ 0,6 erfüllen.

**9.** Luftreifen nach einem der Ansprüche 1 bis 8, wobei in dem Laufstreifenabschnitt der 30°C tanδ und die Dicke (das Maß) G (mm) auf der Äquatorebene des Laufstreifenabschnitts der folgenden Formel genügen:

$$(30°C\ \tan\delta \times G) \leq 1,30.$$

**10.** Luftreifen nach Anspruch 9, wobei das (30°C tanδ × G) nicht mehr als 1,10 beträgt.

**11.** Luftreifen nach einem der Ansprüche 1 bis 10, wobei eine Partikelgröße des vulkanisierten Kautschukpulvers eine Partikelgröße ist, die feiner als 30 Mesh Durchgang und gröber als 250 Mesh Durchgang ist, erhalten durch ein in JIS Z8801-1 spezifiziertes Prüfsieb.

**12.** Luftreifen nach einem der Ansprüche 1 bis 11, wobei die Kautschukzusammensetzung einen flüssigen Kautschuk enthält.

**13.** Luftreifen nach Anspruch 12, wobei der flüssige Kautschuk ein flüssiges Butadien-Polymer (flüssiger BR) ist.

**14.** Luftreifen nach einem der Ansprüche 1 bis 13, wobei die Kautschukzusammensetzung eine Harzkomponente enthält.

**15.** Luftreifen nach einem der Ansprüche 1 bis 14, wobei die Kautschukzusammensetzung ein Pflanzenöl enthält.

**16.** Luftreifen nach einem der Ansprüche 1 bis 15, wobei das vulkanisierte Kautschukpulver Siliziumdioxid enthält.

**Revendications**

**1.** Pneumatique comprenant une rainure principale circonférentielle sur une partie bande de roulement, dans lequel

une couche la plus externe de la partie bande de roulement est formée en utilisant une composition de caoutchouc contenant de la poudre de caoutchouc vulcanisé,
un rapport de surface S (%) de la poudre de caoutchouc vulcanisé en section transversale de la couche la plus externe n'est pas inférieur à 5 % et non supérieur à 50 %,
une tangente de perte (tanδ à 30 °C) de la composition de caoutchouc mesurée dans des conditions de 30 °C, une fréquence de 10 Hz, une déformation initiale de 5 %, et un taux de déformation dynamique de 1 % avec un mode de déformation : la tension n'est pas supérieure à 0,15,
une profondeur de rainure D (mm) de la rainure principale circonférentielle est supérieure à 6 mm, et
la relation S/D > 0,85 est satisfaite.

**2.** Pneumatique selon la revendication 1, dans lequel le rapport de surface S (%) n'est pas inférieur à 20 % et non supérieur à 40 %.

**3.** Pneumatique selon la revendication 1 ou la revendication 2, dans lequel la tanδ à 30 °C n'est pas supérieure à 0,12.

**4.** Pneumatique selon l'une quelconque des revendications 1 à 3, dans lequel S/D n'est pas inférieur à 1,0.

**5.** Pneumatique selon l'une quelconque des revendications 1 à 4, dans lequel la composition de caoutchouc contient, en tant que composant de caoutchouc, un caoutchouc naturel (NR), un caoutchouc de butadiène (BR) et un caoutchouc styrène butadiène (SBR) ayant un ratio de styrène non supérieur à 30 % en masse, et une quantité totale de celui-ci dans100 parties en masse de composant de caoutchouc n'est pas inférieure à 90 parties en masse.

**6.** Pneumatique selon l'une quelconque des revendications 1 à 5, dans lequel la composition de caoutchouc contient de la silice dans une quantité non supérieure à 60 parties en masse pour 100 parties en masse de composant de caoutchouc.

**7.** Pneumatique selon l'une quelconque des revendications 1 à 6, dans lequel la composition de caoutchouc contient un agent de couplage silane ayant un groupement thiocarbonyle.

**8.** Pneumatique selon l'une quelconque des revendications 1 à 7, dans lequel, lorsqu'une épaisseur (jauge) sur un plan équatorial de la partie bande de roulement est désignée par G (mm), l'épaisseur (jauge) G et le rapport de surface S (%) satisfont à la relation S/G ≥ 0,6.

**9.** Pneumatique selon l'une quelconque des revendications 1 à 8, dans lequel, dans la partie bande de roulement, la tan $\delta$ à 30 °C et l'épaisseur (jauge) G (mm) sur le plan équatorial de la partie bande de roulement satisfont à la formule suivante

$$(\tan\delta \text{ à } 30\ °C \times G) \leq 1{,}30.$$

**10.** Pneumatique selon la revendication 9, dans lequel la relation (tan$\delta$ à 30 °C $\times$ G) n'est pas supérieure à 1,10.

**11.** Pneumatique selon l'une quelconque des revendications 1 à 10, dans lequel une taille particulaire de la poudre de caoutchouc vulcanisé est une taille particulaire plus fine passant à 30 mesh et plus grossière passant à 250 mesh obtenue dans un tamis de test cité dans le brevet japonais JIS Z8801-1.

**12.** Pneumatique selon l'une quelconque des revendications 1 à 11, dans lequel la composition de caoutchouc contient un caoutchouc liquide.

**13.** Pneumatique selon la revendication 12, dans lequel le caoutchouc liquide est un polymère de butadiène liquide (BR liquide).

**14.** Pneumatique selon l'une quelconque des revendications 1 à 13, dans lequel la composition de caoutchouc contient un composant résine.

**15.** Pneumatique selon l'une quelconque des revendications 1 à 14, dans lequel la composition de caoutchouc contient une huile végétale.

**16.** Pneumatique selon l'une quelconque des revendications 1 à 15, dans lequel la poudre de caoutchouc vulcanisé contient de la silice.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016043709 A
- JP 2018135436 A
- JP 2021167401 A
- JP 2010111753 A
- US 4414370 A
- JP 59006207 A
- JP H558005 B
- JP H1313522 A
- US 5010166 A


### Non-patent literature cited in the description


- *annual research report of Toagosei Co., Ltd., TREND,* 2000, (3), 42-45